# EUROPEAN PATENT SPECIFICATION

(11) **EP 3 826 129 B1**
(45) Date of publication and mention of the grant of the patent: **29.07.2026**
(21) Application number: 18933206.7
(22) Date of filing: 19.12.2018
(51) Int. Cl.: H02J 7/62, H02J 7/96

(54) **CHARGING DEVICE AND CHARGING SYSTEM**
LADEVORRICHTUNG UND LADESYSTEM
DISPOSITIF DE CHARGE ET SYSTÈME DE CHARGE

(30) Priority: 14.09.2018 CN 201811073097
(43) Date of publication of application: 26.05.2021
(73) Proprietor: Gree Electric Appliances, Inc. of Zhuhai, Zhuhai, Guangdong 519070 (CN)
(72) Inventor: CHEN, Ningning, Zhuhai, Guangdong 519070 (CN); FENG, Chongyang, Zhuhai, Guangdong 519070 (CN); JIANG, Shiyong, Zhuhai, Guangdong 519070 (CN); LIU, Keqin, Zhuhai, Guangdong 519070 (CN); WANG, Jing, Zhuhai, Guangdong 519070 (CN)
(74) Representative: Reddie & Grose LLP
(86) International application number: PCT/CN2018/121911
(87) International publication number: WO 2020/052142

(56) References cited:
- CN-A- 102 487 211
- CN-A- 102 487 211
- CN-A- 104 038 042
- CN-A- 109 038 762
- CN-U- 202 679 228
- CN-U- 202 679 228
- CN-U- 208 707 355
- JP-A- 2016 226 102
- US-A1- 2018 226 816
- US-A1- 2018 254 644

## Description

### CROSS-REFERENCE TO RELATED DISCLOSURES

The present disclosure claims priority to China Patent Disclosure No. 201811073097.3 titled "CHARGING DEVICE AND CHARGING SYSTEM" and filed on September 14, 2018.

### TECHNICAL FIELD

The present disclosure relates to the field of load charging, in particular to a charging device and a charging system.

### BACKGROUND

The Micro Direct Current (DC)-grid system, which is a micro grid system composed of direct current, is an important constituent part of future smart power distribution systems and of great significance for promoting energy conservation and emission reduction and achieving sustainable energy development. Compared with the Micro Alternating Current (AC)-grid system, the Micro DC-grid system may more efficiently and more reliably receive distributed renewable energy power generation systems such as wind power generation system and light power generation system, energy storage units, electric vehicles and other DC power loads. The Micro DC-grid system has a very broad prospect in development and disclosure.

In the Micro DC-grid system, the voltage of the DC bus has multiple voltage levels such as 750V, 400V and 200V. These voltage levels are not only high in voltage values, but also may vary according to different Micro DC-grid systems. However, the DC bus of each voltage level can only carry loads that meet corresponding voltage levels. In the related technologies, the load has its own charging circuit. When it is uncertain whether the load is compatible with the voltage level of the DC bus, if the capacitive DC load is thermally accessed into the Micro DC-grid system, there is an excessive voltage difference therebetween, which may cause the problem of damaging the capacitive load resulting from an excessive instantaneous inrush current of the capacitive load.

Chinese patent application with publication number CN202679228U disclosed a capacitor charging circuit comprising a first voltage detecting device, a first subcircuit, a second subcircuit and a controller, wherein the first voltage detecting device is connected with a capacitor and is used for measuring the voltage of the capacitor; the first subcircuit is connected between a power supply and the capacitor and is used for providing a channel for capacitor charging; the second subcircuit is connected with the first subcircuit in parallel and is used for providing a channel for load power supply; and the controller is respectively connected with the first voltage detecting device, the first subcircuit and the second subcircuit and is used for controlling the on-off of the first subcircuit and the second subcircuit according to the voltage of the capacitor. The actual charging condition of the capacitor is obtained by detecting the actual voltage of the capacitor to control the on-off of the subcircuits of the circuit according to the actual capacitor charging condition, thereby avoiding the problem of liable overcharge or under-charge of the current capacitor charging circuit and improving the reliability of the capacitor and the power supply.

US patent application with publication number US2018226816A1 disclosed a battery protection circuit module including a first positive terminal and a first negative terminal electrically connected to electrode terminals of a battery bare cell, a second positive terminal and a second negative terminal electrically connected to a charger or an electronic device. a single field-effect transistor including a drain terminal, a source terminal, a gate terminal, and a well terminal, wherein the drain terminal is electrically connected to the first negative terminal and the source terminal is electrically connected to the second negative terminal, and a protection integrated circuit (P-IC) for controlling charging/discharging of the battery bare cell by controlling the gate terminal to control whether to switch on the single field-effect transistor and controlling a bias voltage of the well terminal by using an internal switch.

US patent application with publication number US2018254644A1 disclosed an electronic device charger are provided. In an example, an apparatus may include a first plurality of interconnects configured to connect with second interconnects of the electronic device, wherein a first interconnect of the first plurality of interconnects is configured to provide charge power to the electronic device, a power transfer circuit configured to receive a supply voltage and to provide the charge power, a first temperature sensor configured to sense a first temperature of one interconnect of the first plurality of interconnects and to provide an indication of the first temperature, and a comparator configured to receive a threshold and the indication of the first temperature and to disable the power transfer circuit if the first temperature violates the threshold.

### SUMMARY

On such basis, it is necessary to provide a charging device, which addresses the problem of damaging the load resulting from an excessive instantaneous inrush current when the capacitive DC load is thermally accessed into the Micro DC-grid system, for the related technologies in which there are no loads or charging circuits adapted to all voltage levels of the DC bus.

A charging device comprises: a DC bus access terminal configured for electrical connection with a DC bus, so that the charging device is electrically connected to the DC bus; a load access terminal configured for electrical connection with a load to be charged, so that the charging device is electrically connected to the load to be charged; a charging circuit having an input terminal electrically connected to the DC bus access terminal, and an output terminal electrically connected to the load access terminal, so that electrical energy of the DC bus is charged into the load to be charged; a control circuit electrically connected to the charging circuit, for controlling the charging circuit to complete a charging process.

In the above-described charging device, electric energy of the DC bus is charged into the load to be charged by providing a control circuit to control the charging circuit, and the charging circuit is independently provided as a charging device, so that it is possible to be compatible with a plurality of voltage levels of the DC bus and implement that the capacitive DC load is thermally accessed into the Micro DC-grid.

In some embodiments, the DC bus access terminal comprises: a DC bus positive access terminal, electrically connected to an anode of the DC bus; a DC bus negative access terminal, electrically connected to a cathode of the DC bus; the load access terminal comprises: a load positive input terminal, electrically connected to an anode of the load to be charged; a load negative access terminal, electrically connected to a cathode of the load to be charged.

According to the invention, the charging circuit comprises: a first switch circuit including a first switch, wherein one end of the first switch is electrically connected to the DC bus positive access terminal, and the other end of the first switch is electrically connected to the load positive access terminal; a second switch circuit including a second switch and a current-limiting unit connected in series with the second switch, wherein one end of the second switch is electrically connected to the DC bus positive access terminal, and the other end of the second switch is electrically connected to one end of the current-limiting unit, and the other end of the current-limiting unit is electrically connected to the load to be charged; the first switch circuit is connected in parallel with the second switch circuit.

In some embodiments, the charging circuit comprises a relay, the first switch is a first contact of the relay, the second switch is a second contact of the relay, and the current-limiting unit is connected in series with the second contact.

According to the invention, the control circuit comprises: a chip processor, electrically connected to the charging circuit, for controlling on or off of the first switch and the second switch, so as to control the charging circuit to complete a charging process.

In some embodiments, the current-limiting unit comprises: at least one current-limiting resistor, wherein the plurality of current-limiting resistors are connected in series with each other.

According to the invention, the current-limiting unit further comprises: at least one current-limiting inductor, connected in series with the current-limiting resistor.

In some embodiments, the control circuit further comprises: a first sampling unit, wherein one end of the first sampling unit is electrically connected to the DC bus positive access terminal, and the other end is electrically connected to the chip processor, for collecting a first voltage when the charging circuit charges the load to be charged, wherein the first voltage is a voltage across the DC bus; a second sampling unit, wherein one end of the second sampling unit is electrically connected to the load positive access terminal, and the other end is electrically connected to the chip processor, for collecting a second voltage when the charging circuit charges the load to be charged, wherein the second voltage is a voltage across the load; the chip processor determines whether charging of the load to be charged is completed according to a difference between the first voltage and the second voltage: charging of the load to be charged is determined to be completed if the difference between the first voltage and the second voltage is less than a preset threshold.

In some embodiments, the first sampling unit comprises a first operational amplifier, a resistor R1, a resistor R2, a resistor R3, a resistor R4 and a resistor R5; one end of the resistor R1 is electrically connected to the DC bus positive access terminal, and the other end of the resistor R1 is electrically connected to a non-inverting input terminal of the first operational amplifier; one end of the resistor R2 is electrically connected to the DC bus negative input terminal, the other end of the resistor R2 is electrically connected to an inverting input terminal of the first operational amplifier, and the other end of the resistor R2 is also electrically connected to one end of the resistor R4; one end of the resistor R4 is also electrically connected to the inverting input terminal of the first operational amplifier, and the other end of the resistor R4 is electrically connected to an output terminal of the first operational amplifier; one end of the resistor R3 is grounded, and the other end of the resistor R3 is electrically connected to the non-inverting input terminal of the first operational amplifier; the output terminal of the first operational amplifier is electrically connected to the chip processor.

In some embodiments, the second sampling unit comprises a second operational amplifier, a resistor R5, a resistor R6, a resistor R7 and a resistor R8; one end of the resistor R5 is electrically connected to the load positive input terminal, and the other end of the resistor R5 is electrically connected to a non-inverting input terminal of the second operational amplifier; one end of the resistor R6 is electrically connected to the load negative input terminal, the other end of the resistor R6 is electrically connected to an inverting input terminal of the second operational amplifier, and the other end of the resistor R6 is also electrically connected to one end of the resistor R8; one end of the resistor R8 is also electrically connected to the inverting input terminal of the second operational amplifier, and the other end of the resistor R8 is electrically connected to an output terminal of the second operational amplifier; one end of the resistor R7 is grounded, and the other end of the resistor R7 is electrically connected to the non-inverting input terminal of the second operational amplifier; the output terminal of the second operational amplifier is electrically connected to the chip processor.

In some embodiments, the control circuit further comprises: a current sensor having one end electrically connected to the DC bus access terminal, and the other end electrically connected to the chip processor, for collecting a current signal input from the DC bus to the charging device; a power meter having one end electrically connected to the current sensor, and another end electrically connected to the chip processor, for calculating power charged into the load to be charged according to a current signal and a voltage signal input to the charging device by the DC bus, and sending the power charged into the load to be charged to the chip processor.

In some embodiments, the charging device further comprises: a power display screen, electrically connected to the chip processor, for displaying the power charged into the load to be charged.

A charging system applied to a Micro DC-grid system, comprises the charging device mentioned in the foregoing content.

In the charging device and the charging system described above, the charging circuit is independently provided as the charging device, and electric energy of the DC bus is charged into the load to be charged by providing the control circuit to control the charging circuit, so that it is possible to be compatible with multiple Voltage levels of the DC bus and implement that the capacitive DC load may be thermally accessed into the Micro DC-grid. In addition, the charging device may also realize the power metering function, in a convenient and practical manner.

### BRIEF DESCRIPTION OF THE DRAWINGS

Fig. 1 is a schematic structural view of the charging device provided by embodiments of the present disclosure;
Fig. 2 is a schematic structural view of the charging device provided by embodiments of the present disclosure;
Fig. 3 is a schematic structural view of the charging device provided by embodiments of the present disclosure;
Fig. 4 is a schematic structural view of the charging device provided by embodiments of the present disclosure;
Fig. 5 is a schematic structural view of the charging device provided by embodiments of the present disclosure;
Fig. 6 is a schematic structural view of the charging device provided by embodiments of the present disclosure;
Fig. 7 is a schematic structural view of the charging device provided by embodiments of the present disclosure;
Fig. 8 is a schematic structural view of the charging device provided by embodiments of the present disclosure;
Fig. 9 is a schematic structural view of the charging device provided by embodiments of the present disclosure;
Fig. 10 is a schematic structural view of the charging device provided by embodiments of the present disclosure.

### Description of reference numerals:

10 DC bus access terminal
110 DC bus positive access terminal
120 DC bus negative access terminal
20 load access terminal
210 load positive access terminal
220 load negative access terminal
30 charging circuit
310 first switch circuit
311 first switch
320 second switch circuit
321 second switch
322 current-limiting unit
323 current-limiting resistor
324 current-limiting inductor
330 relay
331 first contact
332 second contact
40 control circuit
410 chip processor
420 first sampling unit
421 first operational amplifier
430 second sampling unit
431 second operational amplifier
440 current sensor
450 power meter

### DETAILED DESCRIPTION

In order to make the object, technical solution and advantages of the present disclosure more explicitly understood, the charging device in the present disclosure will be described in further detail below in conjunction with the accompanying drawings and embodiments. It should be understood that, the specific embodiments described here are only intended to explain the present disclosure, rather than limiting the present disclosure.

The present disclosure provides a charging device. It should be noted that, the charging device provided in the present disclosure is not only limited to disclosure in a single charging scenario. In any charging scenario, the charging device provided in the present disclosure may be used. In some embodiments, the charging device provided in the present disclosure is prepared for disclosure in a Micro DC-grid system to pre-charge a capacitive load.

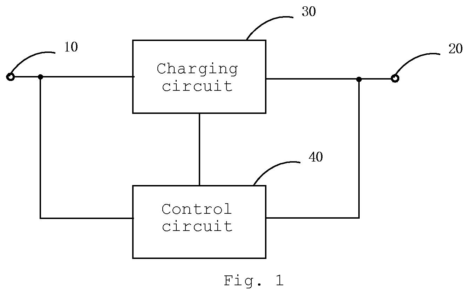

As shown in Fig. 1, in embodiments of the present disclosure, the charging device comprises a DC bus access terminal 10, a load access terminal 20, a charging circuit 30 and a control circuit 40. In embodiments of the present disclosure, the load is a capacitive load. For example, the load may be a capacitor. In the present disclosure, the charging circuit 30 is independently separated from the load to form the charging device with the control circuit 40, the DC bus access terminal 10 and the load access terminal 20, so that there is no need to add a charging circuit 30 for the capacitive load itself. When the capacitive load needs to be charged, it suffices by supplementing the charging device in use. The charging device not only greatly reduces the production cost of the capacitive load, but also makes the charging process of the capacitive load more convenient.

In some embodiments, the DC bus access terminal 10 shown is configured for electrical connection with the DC bus, so that the charging device is electrically connected to the DC bus. For example, the DC bus access terminal 10 may comprise at least one DC bus access contact. The DC bus access contact is configured for electrical connection with the DC bus.

In some embodiments, the load access terminal 20 is configured for electrical connection with the load to be charged, so that the charging device is electrically connected to the load to be charged. For example, the load access terminal 20 may comprise at least one load access contact. The load access contact is configured for electrical connection with the load.

In some embodiments, the input terminal of the charging circuit 30 is electrically connected to the DC bus access terminal 10. The output terminal of the charging circuit 30 is electrically connected to the load access terminal 20. The charging circuit 30 allows that electric energy of the DC bus can be charged into the load to be charged. In other words, the charging circuit 30 may act as a "bridge" between the DC bus and the load.

In some embodiments, the control circuit 40 is electrically connected to the charging circuit 30. The control circuit 40 is configured to control the charging circuit 30 to complete charging. For example, the control circuit 40 may deliver an instruction to the charging circuit 30 to allow the charging circuit 30 to start/interrupt charging.

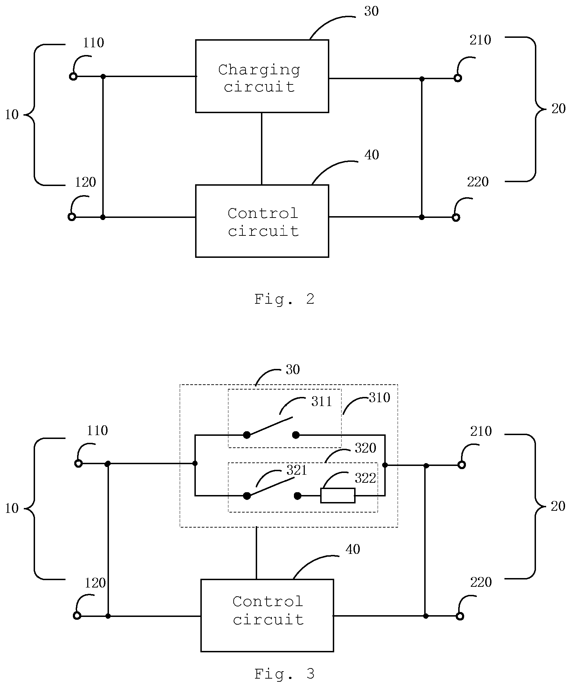

As shown in Fig. 2, in embodiments of the present disclosure, the DC bus access terminal 10 comprises a DC bus positive access terminal 110 and a DC bus negative access terminal 120. The positive access terminal 110 of the DC bus is electrically connected to the anode of the DC bus. The negative access terminal 120 of the DC bus is electrically connected to the cathode of the DC bus.

In some embodiments, the DC bus may comprise an anode and a cathode. The DC bus positive access terminal 110 and the DC bus negative access terminal 120 may be two contacts projecting from the charging device.

In embodiments of the present disclosure, the load access terminal 20 comprises a load positive access terminal 210 and a load negative access terminal 220. The load positive access terminal 210 is electrically connected to the anode of the load to be charged. The load negative access terminal 220 is electrically connected to the cathode of the load to be charged.

In some embodiments, the load to be charged may comprise an anode and a cathode. The load positive access terminal 210 and the load negative access terminal 220 may be two contacts projecting from the charging device.

In some embodiments, the load to be charged may be a capacitive load. For example, the load to be charged may be a capacitor.

As shown in Fig. 3, in embodiments of the present disclosure, the charging circuit 30 comprises a first switch circuit 310 and a second switch circuit 320. The first switch circuit 310 and the second switch circuit 320 are connected in parallel.

In some embodiments, the first switch circuit 310 comprises a first switch 311. One end of the first switch 311 is electrically connected to the DC bus positive access terminal 110. The other end of the first switch 311 is electrically connected to the load positive access terminal 210.

In some embodiments, the second switch circuit 320 comprises a second switch 321 and a current-limiting unit 322 connected in series with the second switch 321. One end of the second switch 321 is electrically connected to the DC bus positive access terminal 110, and the other end of the second switch 321 is electrically connected to one end of the current-limiting unit 322. The other end of the current-limiting unit 322 is electrically connected to the load to be charged.

In some embodiments, the function of the current-limiting unit 322 is to produce a current-limiting effect when the charging device charges the load to be charged. When the load to be charged is thermally accessed into the Micro DC-grid system to charge the load to be charged, if there is an excessive voltage difference between the DC bus voltage and a rated voltage of the load to be charged, it is possible to cause an excessive charging current, so that the load to be charged may be damaged due to breakdown by the charging current.

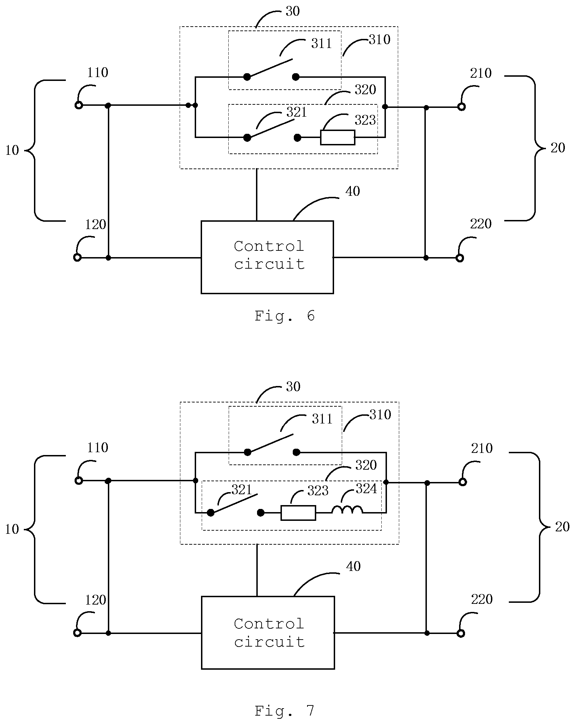

As shown in Fig. 6, in embodiments of the present disclosure, the current-limiting unit 322 comprises at least one current-limiting resistor 323. The plurality of current-limiting resistors 323 are connected in series with each other.

As shown in Fig. 7, in embodiments of the present disclosure, the current-limiting unit 322 further comprises at least one current-limiting inductor 324, which is connected in series with the at least one current-limiting resistor 323.

The current-limiting unit 322 in the present disclosure is not limited to which electronic element or in which connection manner an electronic element is connected, and it suffices as long as the current-limiting unit 322 can realize the current-limiting function.

In the Micro DC-grid system, the voltage of the DC bus has multiple voltage levels such as 750V, 400V and 200V. The voltage level of the DC bus may vary according to different Micro DC-grid systems. In the related technologies, the load to be charged has its own charging circuit 30, so that the load to be charged can only be adapted to a unique DC bus voltage. Once the DC bus of a high-voltage level is accessed, the load to be charged may be damaged due to an excessive charging current.

In embodiments of the present disclosure, the total resistance value of the current-limiting unit 322 is set to be adjustable. The current-limiting unit 322 may automatically adjust the total resistance value of the current-limiting unit 322 according to a voltage of the DC bus, so that the charging current is adapted to the load to be charged.

In embodiments of the present disclosure, the total resistance value of the current-limiting unit 322 is a preset value. The preset value is set to match the highest voltage level of the DC bus. It may be understood that, after the total resistance value of the current-limiting unit 322 is set to match the highest voltage level of the DC bus, the charging current is sufficiently small so that it is possible to be adapted to all DC buses of different voltage levels.

In the above-described embodiments of the present disclosure, the charging circuit 30 is independently separated to make a charging device, and a current-limiting unit 322 is provided in the charging circuit 30. During charging, the charging device may be automatically adapted to DC buses of different voltage levels through the current-limiting unit 322, so that the charging device meets the needs of different voltage levels of the DC bus and different said loads to be charged, with favorable versatility and convenient charging.

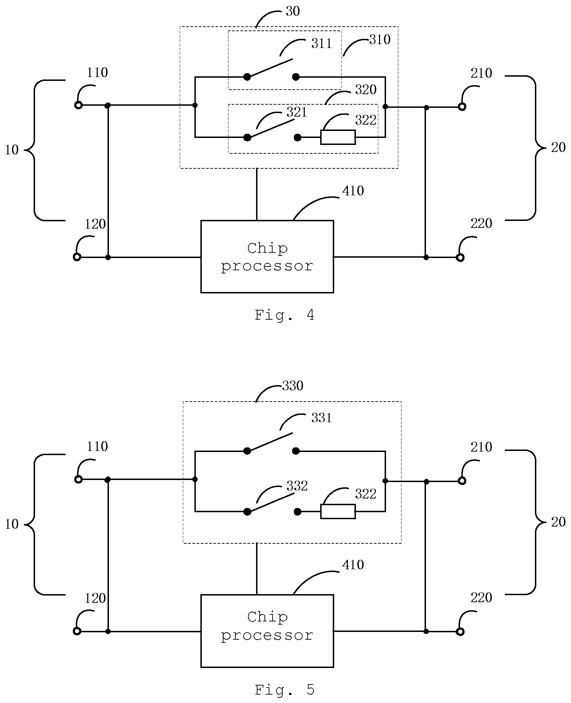

As shown in Fig. 4, in embodiments of the present disclosure, the control circuit 40 comprises a chip processor 410. The chip processor 410 is electrically connected to the charging circuit 30, for controlling the first switch 311 and the second switch 321 to be on or off, so as to control the charging circuit 30 to complete a charging process.

For example, after the charging device is connected to the DC bus and the load to be charged, the chip processor 410 sends a first instruction to the charging circuit 30 so that the first switch 311 is off, and the second switch 321 is on, and the charging circuit 30 starts charging. At this time, the current-limiting unit 322 connected in series with the second switch 321 is accessed into the charging circuit 30 to produce a current-limiting effect, limit the magnitude of the charging current, and ensure the safety of the charging process.

After the power of the load to be charged reaches the requirement, the chip processor 410 sends a second instruction to the charging circuit 30, so that the first switch 311 is on, the second switch 321 is off, and the charging circuit 30 ends charging. At this time, the current-limiting unit 322 connected in series with the second switch 321 loses its function, and the charging is completed.

As shown in Fig. 5, in embodiments of the present disclosure, the charging circuit 30 comprises a relay 330. The first switch 311 is the first contact 331 of the relay 330. The second switch 321 is the second contact 332 of the relay 330. The current-limiting unit 322 is connected in series with the second contact 332.

In some embodiments, the charging circuit 30 is implemented by the relay 330 and the current-limiting unit 322. The first switch 311 is the first contact 331 of the relay 330. The second switch 321 is the second contact 332 of the relay 330.

For example, after the charging device is connected to the DC bus and the load to be charged, the chip processor 410 sends a third instruction to the relay 330, so that the first contact 331 is off, and the second contact 332 is on, and the charging circuit 30 starts charging. At this time, the current-limiting unit 322 connected in series with the second contact 332 is connected to the charging circuit 30 to produce a current-limiting effect, limit the magnitude of the charging current, and ensure the safety of the charging process.

After the chip processor 410 determines that the charging of the load to be charged is completed, the chip processor 410 sends a fourth instruction to the relay 330, so that the first contact 331 is on, and the second contact 332 is off, and the charging circuit 30 ends charging. At this time, the current-limiting unit 322 connected in series with the second contact 332 loses its function, and the charging is completed.

The following content introduces how the chip processor 410 determines whether the charging of the load to be charged is completed.

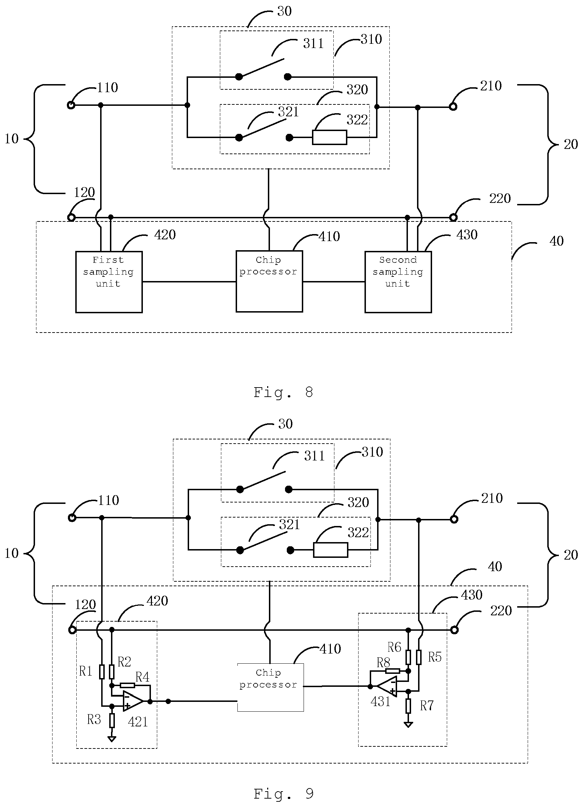

As shown in Fig. 8, in embodiments of the present disclosure, the control circuit 40 further comprises a first sampling unit 420 and a second sampling unit 430.

One end of the first sampling unit 420 is electrically connected to the DC bus positive access terminal 110. The other end of the first sampling unit 420 is electrically connected to the chip processor 410. The first sampling unit 420 is configured to collect a first voltage when the charging circuit 30 charges the load to be charged. The first voltage is a voltage across the DC bus.

One end of the second sampling unit 430 is electrically connected to the load positive access terminal 210. The other end of the second sampling unit 430 is electrically connected to the chip processor 410. The second sampling unit 430 is configured to collect a second voltage when the charging circuit 30 charges the load to be charged. The second voltage is a voltage across the load.

The chip processor 410 determines whether the load to be charged is completed according to the difference between the first voltage and the second voltage. If the difference between the first voltage and the second voltage is less than a preset threshold, the chip processor 410 determines that the charging of the load to be charged is completed.

In some embodiments, the first sampling unit 420 and the second sampling unit 430 are configured to collect the voltage across the DC bus and the voltage across the load to be charged respectively, that is, the first voltage and the second voltage, so as to determine whether the charging process is completed.

In embodiments of the present disclosure, the preset threshold is 1% of the first voltage.

In embodiments of the present disclosure, the chip processor 410 presets a charging time. If the difference between the first voltage and the second voltage is less than a preset threshold within the charging time, the chip processor 410 makes an alarm. The alarm may be implemented in multiple ways, such that it may be implemented by an alarm lamp or may be implemented by an alarm sound. In embodiments of the present disclosure, the chip processor 410 is electrically connected to an upper computer. In embodiments of the present disclosure, after an elapse of delay for a preset time, the chip processor 410 sends an alarm signal to the upper computer, so as to inform the upper computer that there is a fault in the charging circuit 30.

As shown in Fig. 9, in embodiments of the present disclosure, the first sampling unit 420 comprises a first operational amplifier 421, a resistor R1, a resistor R2, a resistor R3 and a resistor R4.

One end of the resistor R1 is electrically connected to the DC bus positive access terminal 110. The other end of the resistor R1 is electrically connected to the non-inverting input terminal of the first operational amplifier 421.

One end of the resistor R2 is electrically connected to the negative access terminal 120 of the DC bus. The other end of the resistor R2 is electrically connected to the inverting input terminal of the first operational amplifier 421. The other end of the resistor R2 is also electrically connected to one end of the resistor R4.

One end of the resistor R4 is also electrically connected to the inverting input terminal of the first operational amplifier 421. The other end of the resistor R4 is electrically connected to the output terminal of the first operational amplifier 421.

One end of the resistor R3 is grounded, and the other end of the resistor R3 is electrically connected to the non-inverting input terminal of the first operational amplifier 421.

The output terminal of the first operational amplifier 421 is electrically connected to the chip processor 410.

In some embodiments, the second sampling unit 430 comprises a second operational amplifier 431, a resistor R5, a resistor R6, a resistor R7, and a resistor R8.

One end of the resistor R5 is electrically connected to the load positive access terminal 210. The other end of the resistor R5 is electrically connected to the non-inverting input terminal of the second operational amplifier 431.

One end of the resistor R6 is electrically connected to the load negative access terminal 220. The other end of the resistor R6 is electrically connected to the inverting input terminal of the second operational amplifier 431. The other end of the resistor R6 is also electrically connected to one end of the resistor R8.

One end of the resistor R8 is also electrically connected to the inverting input terminal of the second operational amplifier 431. The other end of the resistor R8 is electrically connected to the output terminal of the second operational amplifier 431.

One end of the resistor R7 is grounded. The other end of the resistor R7 is electrically connected to the non-inverting input terminal of the second operational amplifier 431.

The output terminal of the second operational amplifier 431 is electrically connected to the chip processor 410.

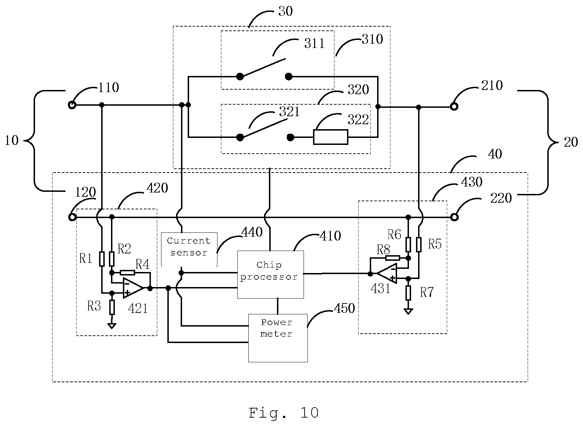

As shown in Fig. 10, in embodiments of the present disclosure, the control circuit 40 further comprises a current sensor 440 and a power meter 450.

One end of the current sensor 440 is electrically connected to the DC bus access terminal 10. The other end of the current sensor 440 is electrically connected to the chip processor 410. The current sensor 440 is configured to collect the current signal input from the DC bus to the charging device.

One end of the power meter 450 is electrically connected to the current sensor 440. The other end of the power meter 450 is electrically connected to the chip processor 410. The power meter 450 is configured to calculate the power charged into the load to be charged according to the current signal and the voltage signal input to the charging device from the DC bus. The power meter 450 is also configured to send the power charged into the load to be charged to the chip processor 410.

In some embodiments, the current sensor 440 and the power meter 450 are provided in the control circuit 40, to realize the metering function of the power to be charged into the load, so that the user may visually observe the household power, in a convenient and fast manner.

In embodiments of the present disclosure, the charging device further comprises a power display screen. The power display screen is electrically connected to the chip processor 410 and configured to display the power charged into the load to be charged.

In the above-described charging device, the charging circuit 30 is independently provided as a charging device. First of all, the charging circuit 30 is controlled by the control circuit 40 to charge electric energy of the DC bus into the load to be charged, so that it is possible to be compatible with a plurality of voltage levels of the DC bus and implement that the capacitive DC load is thermally accessed into the Micro DC-grid system in a safe and reliable manner. Next, the current-limiting unit 322 is provided so that the charging device may serve as a universal charging device, which is compatible with a plurality of voltage levels of said DC bus and the load to be charged. Finally, the charging device may also realize the power metering function through the current sensor 440 and the power meter 450, in a convenient and practical manner.

The present disclosure also provides a charging system, which is applied to a Micro DC-grid system, wherein the charging system comprises the charging device mentioned in the foregoing content.

Various technical features of the above-described embodiments may be combined arbitrarily. In order to make a concise illustration, all possible combinations of various technical features in the above-described embodiments are not described. However, as long as there is no contradiction in the combinations of these technical features, they should be considered as the scope recited in this specification.

The above-described embodiments only express several implementations of the present disclosure, in relatively specific and detailed descriptions, but cannot thus be understood as limiting the scope of the patent disclosure. It should be set forth that, for those of ordinary skill in the art, without departing from the concept of the present disclosure, several modifications and improvements may also be made, and all these fall within the protection scope of the present disclosure. Therefore, the protection scope of the present patent disclosure shall be subject to the appended claims.

## Claims

1. A charging device comprising:
a Direct Current (DC) bus access terminal (10) configured for electrical connection with a DC bus, to electrically connect the charging device to the DC bus;
a load access terminal (20) configured for electrical connection with a load to be charged, to electrically connect the charging device to the load to be charged;
a charging circuit (30) having an input terminal electrically connected to the DC bus access terminal (10), and an output terminal electrically connected to the load access terminal (20), to charge electrical energy of the DC bus into the load to be charged; and
a control circuit (40) electrically connected to the charging circuit (30), for controlling the charging circuit (30) to complete a charging process;
the charging circuit (30) comprises:
a first switch circuit (310) comprising a first switch (311), wherein one end of the first switch (311) is electrically connected to the DC bus positive access terminal (110), and the other end of the first switch (311) is electrically connected to the load positive access terminal (210); and
a second switch circuit (320) comprising a second switch (321) and a current-limiting unit (322) connected in series with the second switch (321), wherein one end of the second switch (321) is electrically connected to the DC bus positive access terminal (110), and the other end of the second switch (321) is electrically connected to one end of the current-limiting unit (322), the other end of the current-limiting unit (322) is electrically connected to the load to be charged, and the first switch circuit (310) is connected in parallel with the second switch circuit (320), and the function of the current-limiting unit (322) is to produce a current-limiting effect when the charging device charges the load to be charged;
the control circuit (40) comprises:
a chip processor (410) electrically connected to the charging circuit (30), for controlling the first switch (311) and the second switch (321) to be on or off, so as to control the charging circuit (30) to complete a charging process, after the charging device is connected to the DC bus and the load to be charged, wherein the chip processor (410) sends a first instruction to the charging circuit (30) so that the first switch (311) is off, and the second switch (321) is on, and the charging circuit (30) starts charging;
the current-limiting unit (322) further comprises: at least one current-limiting inductor (324), connected in series with a current-limiting resistor (323).

2. The charging device according to claim 1, **characterized in that** wherein:
the DC bus access terminal (10) comprises:
a DC bus positive access terminal (110) electrically connected to an anode of the DC bus, and
a DC bus negative access terminal (120) electrically connected to a cathode of the DC bus; and
the load access terminal (20) comprises:
a load positive access terminal (210) electrically connected to an anode of the load to be charged, and
a load negative access terminal (220) electrically connected to a cathode of the load to be charged.

3. The charging device according to claim 1, **characterized in that** wherein:
the charging circuit (30) comprises a relay (330);
the first switch (311) is a first contact (331) of the relay;
the second switch (321) is a second contact (332) of the relay; and
the current-limiting unit (322) is connected in series with the second contact (332).

4. The charging device according to claim 1, **characterized in that** the current-limiting unit (322) comprises:
one or more current-limiting resistors (323).

5. The charging device according to claim 1, **characterized in that** the control circuit (40) further comprises:
a first sampling unit (420), of which one end is electrically connected to the DC bus positive access terminal (110), and the other end is electrically connected to the chip processor (410), the first sampling unit (420) is configured for collecting a first voltage across the DC bus when the charging circuit (30) charges the load to be charged, and
a second sampling unit (430), wherein one end of the second sampling unit (430) is electrically connected to the load positive access terminal (210), and the other end is electrically connected to the chip processor (410), for collecting a second voltage when the charging circuit (30) charges the load to be charged, wherein the second voltage is a voltage across the load, and
wherein the chip processor (410) is configured to determine whether charging of the load to be charged is completed according to a difference between the first voltage and the second voltage, and determine the charging of the load to be charged is completed if the difference between the first voltage and the second voltage is less than a preset threshold.

6. The charging device according to claim 5, **characterized in that**, wherein:
the first sampling unit (420) comprises:
a first operational amplifier (421), a resistor (R1), a resistor (R2), a resistor (R3) and a resistor (R4);
one end of the resistor (R1) is electrically connected to the DC bus positive access terminal (110), and the other end of the resistor (R1) is electrically connected to a non-inverting input terminal of the first operational amplifier (421);
one end of the resistor (R2) is electrically connected to the DC bus negative input terminal (120), the other end of the resistor (R2) is electrically connected to an inverting input terminal of the first operational amplifier (421), and the other end of the resistor (R2) is also electrically connected to one end of the resistor (R4);
one end of the resistor (R4) is electrically connected to the inverting input terminal of the first operational amplifier (421), and the other end of the resistor (R4) is electrically connected to an output terminal of the first operational amplifier (421);
one end of the resistor (R3) is grounded, and the other end of the resistor (R3) is electrically connected to the non-inverting input terminal of the first operational amplifier (421); and
the output terminal of the first operational amplifier (421) is electrically connected to the chip processor (410).

7. The charging device according to claim 5, **characterized in that**, wherein:
the second sampling unit (430) comprises a second operational amplifier (431), a resistor (R5), a resistor (R6), a resistor (R7) and a resistor (R8);
one end of the resistor (R5) is electrically connected to the load positive input terminal (210), and the other end of the resistor (R5) is electrically connected to a non-inverting input terminal of the second operational amplifier (431);
one end of the resistor (R6) is electrically connected to the load negative input terminal (220), the other end of the resistor (R6) is electrically connected to an inverting input terminal of the second operational amplifier (431), and the other end of the resistor (R6) is also electrically connected to one end of the resistor (R8);
one end of the resistor (R8) is electrically connected to the inverting input terminal of the second operational amplifier (431), and the other end of the resistor (R8) is electrically connected to an output terminal of the second operational amplifier (431);
one end of the resistor (R7) is grounded, and the other end of the resistor (R7) is electrically connected to the non-inverting input terminal of the second operational amplifier (431); and
the output terminal of the second operational amplifier (431) is electrically connected to the chip processor (410).

8. The charging device according to claim 1, **characterized in that** the control circuit (40) further comprises:
a current sensor (440) having one end electrically connected to the DC bus access terminal (10), and the other end electrically connected to the chip processor (410), for collecting a current signal input from the DC bus to the charging device.

9. The charging device of claim 8, **characterized in that** the charging device further comprises:
a power display screen, electrically connected to the chip processor (410), for displaying the power charged into the load to be charged.

10. A charging system applied to a Micro DC-grid system, **characterized in that** the charging system comprises the charging device according to any one of claims 1-9.

11. The charging device according to claim 1, wherein the current-limiting unit (322) comprises:
a plurality of current-limiting resistors (323), wherein the plurality of current-limiting resistors (323) are connected in series with each other.

12. The charging device according to claim 8, wherein the control circuit (40) further comprises:
a power meter (450) having one end electrically connected to the current sensor (440), and another end electrically connected to the chip processor (410), for calculating power charged into the load to be charged according to a current signal and a voltage signal input to the charging device by the DC bus, and sending the power charged into the load to be charged to the chip processor (410).

## Patentansprüche

1. Ladevorrichtung, umfassend:
einen Gleichstrom- (DC-) Bus-Zugangsanschluss (10), der für eine elektrische Verbindung mit einem DC-Bus ausgebildet ist, um die Ladevorrichtung elektrisch mit dem DC-Bus zu verbinden;
einen Lastzugangsanschluss (20), der für eine elektrische Verbindung mit einer zu ladenden Last ausgebildet ist, um die Ladevorrichtung elektrisch mit der zu ladenden Last zu verbinden;
eine Ladeschaltung (30), aufweisend einen Eingangsanschluss, der elektrisch mit dem DC-Bus-Zugangsanschluss (10) verbunden ist, und einen Ausgangsanschluss, der elektrisch mit dem Lastzugangsanschluss (20) verbunden ist, um elektrische Energie des DC-Busses in die zu ladende Last zu laden; und
eine Steuerschaltung (40), die elektrisch mit der Ladeschaltung (30) verbunden ist, zum Steuern der Ladeschaltung (30), um einen Ladevorgang abzuschließen;
wobei die Ladeschaltung (30) umfasst:
einen ersten Schaltkreis (310), umfassend einen ersten Schalter (311), wobei ein Ende des ersten Schalters (311) elektrisch mit dem DC-Bus-Pluszugangsanschluss (110) verbunden ist, und das andere Ende des ersten Schalters (311) elektrisch mit dem Last-Pluszugangsanschluss (210) verbunden ist; und
einen zweiten Schaltkreis (320), umfassend einen zweiten Schalter (321) und eine Strombegrenzungseinheit (322), die mit dem zweiten Schalter (321) in Reihe geschaltet ist, wobei ein Ende des zweiten Schalters (321) elektrisch mit dem DC-Bus-Pluszugangsanschluss (110) verbunden ist, und das andere Ende des zweiten Schalters (321) elektrisch mit einem Ende der Strombegrenzungseinheit (322) verbunden ist, das andere Ende der Strombegrenzungseinheit (322) ist elektrisch mit der zu ladenden Last verbunden, und der erste Schaltkreis (310) ist parallel mit dem zweiten Schaltkreis (320) geschaltet, und die Funktion der Strombegrenzungseinheit (322) besteht darin, eine strombegrenzende Wirkung zu erzeugen, wenn die Ladevorrichtung die zu ladende Last lädt;
wobei die Steuerschaltung (40) umfasst:
einen Chip-Prozessor (410), der elektrisch mit der Ladeschaltung (30) verbunden ist, um den ersten Schalter (311) und den zweiten Schalter (321) zu steuern, angeschaltet oder ausgeschaltet zu sein, um dadurch die Ladeschaltung (30) zu steuern, einen Ladevorgang abzuschließen, nachdem die Ladevorrichtung mit dem DC-Bus und der zu ladenden Last verbunden ist, wobei der Chip-Prozessor (410) eine erste Anweisung an die Ladeschaltung (30) sendet, sodass der erste Schalter (311) aus ist und der zweite Schalter (321) an ist, und die Ladeschaltung (30) mit dem Laden beginnt;
wobei die Strombegrenzungseinheit (322) weiter umfasst: mindestens einen Strombegrenzungsinduktor (324), der mit einem Strombegrenzungswiderstand (323) in Reihe geschaltet ist.

2. Ladevorrichtung nach Anspruch 1, **dadurch gekennzeichnet, dass**, wobei:
der DC-Bus-Zugangsanschluss (10) umfasst:
einen DC-Bus-Pluszugangsanschluss (110), der elektrisch mit einer Anode des DC-Busses verbunden ist, und
einen DC-Bus-Minuszugangsanschluss (120), der elektrisch mit einer Kathode des DC-Busses verbunden ist; und
der Lastzugangsanschluss (20) umfasst:
einen Last-Pluszugangsanschluss (210), der elektrisch mit einer Anode der zu ladenden Last verbunden ist, und
einen Last-Minuszugangsanschluss (220), der elektrisch mit einer Kathode der zu ladenden Last verbunden ist.

3. Ladevorrichtung nach Anspruch 1, **dadurch gekennzeichnet, dass**, wobei:
die Ladeschaltung (30) ein Relais (330) umfasst;
der erste Schalter (311) ein erster Kontakt (331) des Relais ist;
der zweite Schalter (321) ein zweiter Kontakt (332) des Relais ist; und
die Strombegrenzungseinheit (322) mit dem zweiten Kontakt (332) in Reihe geschaltet ist.

4. Ladevorrichtung nach Anspruch 1, **dadurch gekennzeichnet, dass** die Strombegrenzungseinheit (322) umfasst:
einen oder mehrere Strombegrenzungswiderstände (323).

5. Ladevorrichtung nach Anspruch 1, **dadurch gekennzeichnet, dass** die Steuerschaltung (40) weiter umfasst:
eine erste Abtasteinheit (420), von der ein Ende elektrisch mit dem DC-Bus-Pluszugangsanschluss (110) verbunden ist, und das andere Ende elektrisch mit dem Chip-Prozessor (410) verbunden ist, wobei die erste Abtasteinheit (420) dafür ausgebildet ist, eine erste Spannung über den DC-Bus zu erfassen, wenn die Ladeschaltung (30) die zu ladende Last lädt, und
eine zweite Abtasteinheit (430), wobei ein Ende der zweiten Abtasteinheit (430) elektrisch mit dem Last-Pluszugangsanschluss (210) verbunden ist, und das andere Ende elektrisch mit dem Chip-Prozessor (410) verbunden ist, zum Erfassen einer zweiten Spannung, wenn die Ladeschaltung (30) die zu ladende Last lädt, wobei die zweite Spannung eine Spannung über die Last ist, und
wobei der Chip-Prozessor (410) dafür ausgebildet ist, gemäß einer Differenz zwischen der ersten Spannung und der zweiten Spannung zu bestimmen, ob das Laden der zu ladenden Last abgeschlossen ist, und zu bestimmen, dass das Laden der zu ladenden Last abgeschlossen ist, wenn die Differenz zwischen der ersten Spannung und der zweiten Spannung kleiner als ein voreingestellter Schwellenwert ist.

6. Ladevorrichtung nach Anspruch 5, **dadurch gekennzeichnet, dass**, wobei:
die erste Abtasteinheit (420) umfasst:
einen ersten Operationsverstärker (421), einen Widerstand (R1), einen Widerstand (R2), einen Widerstand (R3) und einen Widerstand (R4);
ein Ende des Widerstands (R1) elektrisch mit dem DC-Bus-Pluszugangsanschluss (110) verbunden ist und das andere Ende des Widerstands (R1) elektrisch mit einem nichtinvertierenden Eingangsanschluss des ersten Operationsverstärkers (421) verbunden ist;
ein Ende des Widerstands (R2) elektrisch mit dem DC-Bus-Minus-Eingangsanschluss (120) verbunden ist, das andere Ende des Widerstands (R2) elektrisch mit einem invertierenden Eingangsanschluss des ersten Operationsverstärkers (421) verbunden ist und das andere Ende des Widerstands (R2) auch mit einem Ende des Widerstands (R4) elektrisch verbunden ist;
ein Ende des Widerstands (R4) elektrisch mit dem invertierenden Eingangsanschluss des ersten Operationsverstärkers (421) verbunden ist und das andere Ende des Widerstands (R4) elektrisch mit einem Ausgangsanschluss des ersten Operationsverstärkers (421) verbunden ist;
ein Ende des Widerstands (R3) geerdet ist und das andere Ende des Widerstands (R3) elektrisch mit dem nichtinvertierenden Eingangsanschluss des ersten Operationsverstärkers (421) verbunden ist; und
der Ausgangsanschluss des ersten Operationsverstärkers (421) elektrisch mit dem Chip-Prozessor (410) verbunden ist.

7. Ladevorrichtung nach Anspruch 5, **dadurch gekennzeichnet, dass**, wobei:
die zweite Abtasteinheit (430) einen zweiten Operationsverstärker (431), einen Widerstand (R5), einen Widerstand (R6), einen Widerstand (R7) und einen Widerstand (R8) umfasst;
ein Ende des Widerstands (R5) elektrisch mit dem Last-Plus-Eingangsanschluss (210) verbunden ist und das andere Ende des Widerstands (R5) elektrisch mit einem nichtinvertierenden Eingangsanschluss des zweiten Operationsverstärkers (431) verbunden ist;
ein Ende des Widerstands (R6) elektrisch mit dem Last-Minus-Eingangsanschluss (220) verbunden ist, das andere Ende des Widerstands (R6) elektrisch mit einem invertierenden Eingangsanschluss des zweiten Operationsverstärkers (431) verbunden ist und das andere Ende des Widerstands (R6) auch mit einem Ende des Widerstands (R8) elektrisch verbunden ist;
ein Ende des Widerstands (R8) elektrisch mit dem invertierenden Eingangsanschluss des zweiten Operationsverstärkers (431) verbunden ist und das andere Ende des Widerstands (R8) elektrisch mit einem Ausgangsanschluss des zweiten Operationsverstärkers (431) verbunden ist;
ein Ende des Widerstands (R7) geerdet ist und das andere Ende des Widerstands (R7) elektrisch mit dem nichtinvertierenden Eingangsanschluss des zweiten Operationsverstärkers (431) verbunden ist; und
der Ausgangsanschluss des zweiten Operationsverstärkers (431) elektrisch mit dem Chip-Prozessor (410) verbunden ist.

8. Ladevorrichtung nach Anspruch 1, **dadurch gekennzeichnet, dass** die Steuerschaltung (40) weiter umfasst:
einen Stromsensor (440), der ein Ende, das elektrisch mit dem DC-Bus-Zugangsanschluss (10) verbunden ist, und ein anderes Ende aufweist, das elektrisch mit dem Chip-Prozessor (410) verbunden ist, zum Erfassen eines von dem DC-Bus in die Ladevorrichtung eingegebenen Stromsignals.

9. Ladevorrichtung nach Anspruch 8, **dadurch gekennzeichnet, dass** die Ladevorrichtung weiter umfasst:
einen Leistungsanzeigebildschirm, der elektrisch mit dem Chip-Prozessor (410) verbunden ist, zum Anzeigen der in die zu ladende Last geladenen Leistung.

10. Ladesystem, das auf ein Mikro-DC-Netzsystem angewendet wird, **dadurch gekennzeichnet, dass** das Ladesystem die Ladevorrichtung nach einem der Ansprüche 1-9 umfasst.

11. Ladevorrichtung nach Anspruch 1, wobei die Strombegrenzungseinheit (322) umfasst:
eine Vielzahl von Strombegrenzungswiderständen (323), wobei die Vielzahl von Strombegrenzungswiderständen (323) miteinander in Reihe geschaltet sind.

12. Ladevorrichtung nach Anspruch 8, wobei die Steuerschaltung (40) weiter umfasst:
einen Leistungsmesser (450), der ein Ende, das elektrisch mit dem Stromsensor (440) verbunden ist, und ein anderes Ende aufweist, das elektrisch mit dem Chip-Prozessor (410) verbunden ist, zum Berechnen der in die zu ladende Last geladenen Leistung gemäß einem Stromsignal und einem Spannungssignal, die von dem DC-Bus in die Ladevorrichtung eingegeben werden, und zum Senden der in die zu ladende Last geladenen Leistung an den Chip-Prozessor (410).

## Revendications

1. Dispositif de charge comprenant :
une borne (10) d'accès de bus à courant continu (CC) configurée pour une connexion électrique avec un bus CC, pour connecter électriquement le dispositif de charge au bus CC ;
une borne (20) d'accès de charge configurée pour une connexion électrique avec une charge à charger, pour connecter électriquement le dispositif de charge à la charge à charger ;
un circuit de charge (30) présentant une borne d'entrée connectée électriquement à la borne (10) d'accès de bus CC, et une borne de sortie connectée électriquement à la borne (20) d'accès de charge, pour charger l'énergie électrique du bus CC dans la charge à charger ; et
un circuit de commande (40) connecté électriquement au circuit de charge (30), pour commander le circuit de charge (30) afin d'achever un procédé de charge ;
le circuit de charge (30) comprend :
un premier circuit de commutation (310) comprenant un premier commutateur (311), dans lequel une extrémité du premier commutateur (311) est connectée électriquement à la borne (110) d'accès positive de bus CC, et l'autre extrémité du premier commutateur (311) est connectée électriquement à la borne (210) d'accès positive de charge ; et
un deuxième circuit de commutation (320) comprenant un deuxième commutateur (321) et une unité (322) de limitation de courant connectée en série avec le deuxième commutateur (321), dans lequel une extrémité du deuxième commutateur (321) est connectée électriquement à la borne (110) d'accès positive de bus CC, et l'autre extrémité du deuxième commutateur (321) est connectée électriquement à une extrémité de l'unité (322) de limitation de courant, l'autre extrémité de l'unité (322) de limitation de courant est connectée électriquement à la charge à charger, et le premier circuit de commutation (310) est connecté en parallèle avec le deuxième circuit de commutation (320), et la fonction de l'unité (322) de limitation de courant est de produire un effet de limitation de courant lorsque le dispositif de charge charge la charge à charger ;
le circuit de commande (40) comprend :
un processeur à puce (410), connecté électriquement au circuit de charge (30), pour commander l'activation ou la désactivation du premier commutateur (311) et du deuxième commutateur (321), de manière à commander le circuit de charge (30) afin d'achever un procédé de charge, après que le dispositif de charge est connecté au bus CC et à la charge à charger, dans lequel le processeur à puce (410) envoie une première instruction au circuit de charge (30) de sorte que le premier commutateur (311) soit désactivé, et que le deuxième commutateur (321) soit activé, et le circuit de charge (30) commence la charge ;
l'unité (322) de limitation de courant comprend en outre : au moins une inductance (324) de limitation de courant, connectée en série avec une résistance (323) de limitation de courant.

2. Dispositif de charge selon la revendication 1, **caractérisé en ce que** , dans lequel:
la borne (10) d'accès de bus CC comprend :
une borne (110) d'accès positive de bus CC connectée électriquement à une anode du bus CC, et
une borne (120) d'accès négative de bus CC connectée électriquement à une cathode du bus CC ; et
la borne (20) d'accès de charge comprend :
une borne (210) d'accès positive de charge connectée électriquement à une anode de la charge à charger, et
une borne (220) d'accès négative de charge connectée électriquement à une cathode de la charge à charger.

3. Dispositif de charge selon la revendication 1, **caractérisé en ce que** , dans lequel:
le circuit de charge (30) comprend un relais (330) ;
le premier commutateur (311) est un premier contact (331) du relais ;
le deuxième commutateur (321) est un deuxième contact (332) du relais ; et l'unité (322) de limitation de courant est connectée en série avec le deuxième contact (332).

4. Dispositif de charge selon la revendication 1, **caractérisé en ce que** l'unité (322) de limitation de courant comprend :
une ou plusieurs résistances (323) de limitation de courant.

5. Dispositif de charge selon la revendication 1, **caractérisé en ce que** le circuit de commande (40) comprend en outre :
une première unité d'échantillonnage (420), dont une extrémité est connectée électriquement à la borne (110) d'accès positive de bus CC, et l'autre extrémité est connectée électriquement au processeur à puce (410), la première unité d'échantillonnage (420) est configurée pour collecter une première tension aux bornes du bus CC lorsque le circuit de charge (30) charge la charge à charger, et
une deuxième unité d'échantillonnage (430), dans lequel une extrémité de la deuxième unité d'échantillonnage (430) est connectée électriquement à la borne (210) d'accès positive de charge, et l'autre extrémité est connectée électriquement au processeur à puce (410), pour collecter une deuxième tension lorsque le circuit de charge (30) charge la charge à charger, dans lequel la deuxième tension est une tension aux bornes de la charge, et
dans lequel le processeur à puce (410) est configuré pour déterminer si la charge de la charge à charger est achevée selon une différence entre la première tension et la deuxième tension, et déterminer que la charge de la charge à charger est achevée si la différence entre la première tension et la deuxième tension est inférieure à un seuil prédéfini.

6. Dispositif de charge selon la revendication 5, **caractérisé en ce que**, dans lequel :
la première unité d'échantillonnage (420) comprend :
un premier amplificateur opérationnel (421), une résistance (R1), une résistance (R2), une résistance (R3) et une résistance (R4) ;
une extrémité de la résistance (R1) est connectée électriquement à la borne (110) d'accès positive de bus CC, et l'autre extrémité de la résistance (R1) est connectée électriquement à une borne d'entrée non inverseuse du premier amplificateur opérationnel (421) ;
une extrémité de la résistance (R2) est connectée électriquement à la borne (120) d'entrée négative de bus CC, l'autre extrémité de la résistance (R2) est connectée électriquement à une borne d'entrée inverseuse du premier amplificateur opérationnel (421), et l'autre extrémité de la résistance (R2) est également connectée électriquement à une extrémité de la résistance (R4) ;
une extrémité de la résistance (R4) est connectée électriquement à la borne d'entrée inverseuse du premier amplificateur opérationnel (421), et l'autre extrémité de la résistance (R4) est connectée électriquement à une borne de sortie du premier amplificateur opérationnel (421) ;
une extrémité de la résistance (R3) est mise à la terre, et l'autre extrémité de la résistance (R3) est connectée électriquement à la borne d'entrée non inverseuse du premier amplificateur opérationnel (421) ; et
la borne de sortie du premier amplificateur opérationnel (421) est connectée électriquement au processeur à puce (410).

7. Dispositif de charge selon la revendication 5, **caractérisé en ce que**, dans lequel :
la deuxième unité d'échantillonnage (430) comprend un deuxième amplificateur opérationnel (431), une résistance (R5), une résistance (R6), une résistance (R7) et une résistance (R8) ;
une extrémité de la résistance (R5) est connectée électriquement à la borne (210) d'entrée positive de charge, et l'autre extrémité de la résistance (R5) est connectée électriquement à une borne d'entrée non inverseuse du deuxième amplificateur opérationnel (431) ;
une extrémité de la résistance (R6) est connectée électriquement à la borne (220) d'entrée négative de charge, l'autre extrémité de la résistance (R6) est connectée électriquement à une borne d'entrée inverseuse du deuxième amplificateur opérationnel (431), et l'autre extrémité de la résistance (R6) est également connectée électriquement à une extrémité de la résistance (R8) ;
une extrémité de la résistance (R8) est connectée électriquement à la borne d'entrée inverseuse du deuxième amplificateur opérationnel (431), et l'autre extrémité de la résistance (R8) est connectée électriquement à une borne de sortie du deuxième amplificateur opérationnel (431) ;
une extrémité de la résistance (R7) est mise à la terre, et l'autre extrémité de la résistance (R7) est connectée électriquement à la borne d'entrée non inverseuse du deuxième amplificateur opérationnel (431) ; et
la borne de sortie du deuxième amplificateur opérationnel (431) est connectée électriquement au processeur à puce (410).

8. Dispositif de charge selon la revendication 1, **caractérisé en ce que** le circuit de commande (40) comprend en outre :
un capteur de courant (440) présentant une extrémité connectée électriquement à la borne (10) d'accès de bus CC, et l'autre extrémité connectée électriquement au processeur à puce (410), pour collecter un signal de courant entré depuis le bus CC dans le dispositif de charge.

9. Dispositif de charge selon la revendication 8, **caractérisé en ce que** le dispositif de charge comprend en outre :
un écran d'affichage de la puissance, connecté électriquement au processeur à puce (410), pour afficher la puissance chargée dans la charge à charger.

10. Système de charge appliqué à un système de micro-réseau CC, **caractérisé en ce que** le système de charge comprend le dispositif de charge selon l'une quelconque des revendications 1 à 9.

11. Dispositif de charge selon la revendication 1, dans lequel l'unité (322) de limitation de courant comprend :
une pluralité de résistances (323) de limitation de courant, dans lequel la pluralité de résistances (323) de limitation de courant sont connectées en série les unes avec les autres.

12. Dispositif de charge selon la revendication 8, dans lequel le circuit de commande (40) comprend en outre :
un dispositif (450) de mesure de puissance présentant une extrémité connectée électriquement au capteur de courant (440), et une autre extrémité connectée électriquement au processeur à puce (410), pour calculer la puissance chargée dans la charge à charger selon un signal de courant et un signal de tension entrés dans le dispositif de charge par le bus CC, et envoyer la puissance chargée dans la charge à charger au processeur à puce (410).
